# EUROPÄISCHE PATENTSCHRIFT

(11) **EP 0 544 173 B1**
(45) Veröffentlichungstag und Bekanntmachung des Hinweises auf die Patenterteilung: **25.01.1995**
(21) Anmeldenummer: 92119564.0
(22) Anmeldetag: 16.11.1992
(51) Int. Cl.: G01F 23/28

(54) **Verfahren und Einrichtung zum Bestimmen, ob in einem Behälter Flüssigkeit enthalten ist**
Method and device for determination of the presence of a liquid in a container
Procédé et dispositif pour la détermination de la présence d'un liquide dans un réservoir

(30) Priorität: 28.11.1991 DE 4139146
(43) Veröffentlichungstag der Anmeldung: 02.06.1993
(73) Patentinhaber: SIEMENS AKTIENGESELLSCHAFT, 80333 München (DE)
(72) Erfinder: Lather, Dieter, Dipl.-Ing., W-8755 Alzenau (DE); Lingenberg, Dieter, Dipl.-Phys., W-6230 Frankfurt 80 (DE)

(56) Entgegenhaltungen:
- EP-A- 0 309 890
- FR-A- 2 617 594

## Beschreibung

Die Erfindung betrifft ein Verfahren zum Bestimmen, ob in einem Behälter Flüssigkeit enthalten ist, wobei in eine äußere Oberfläche der Wand des Behälters ein Signal eingespeist wird, das an der gegenüberliegenden inneren Oberfläche der Wand ganz oder teilweise reflektiert wird und wobei das reflektierte Signal an der äußeren Oberfläche der Wand gemessen wird. Die Erfindung betrifft auch eine Einrichtung zum Bestimmen, ob in einem Behälter Flüssigkeit enthalten ist, wobei an einer äußeren Oberfläche einer Wand des Behälters ein Sender und an der gleichen Oberfläche mindestens ein Empfänger angeordnet sind.

Ein Verfahren und eine Einrichtung zum Bestimmen des Füllstands und der Blasenbildung in einem Behälter ist der EP 0 309 890 A1 zu entnehmen. Nach dem dort in Figur 7 gezeigten Meßverfahren wird durch einen Sender ein Signal in eine Behälterwand eingespeist. An derjenigen Oberfläche der Behälterwand, die dem Sender gegenüberliegt, wird das Signal reflektiert. Es erreicht dann wieder die mit dem Sender versehene Oberfläche in einer durch den Einstrahlwinkel vorgegebenen Entfernung. Dort kann eine erneute Reflexion erfolgen, auf die dann wieder eine Reflexion an der gegenüberliegenden Oberfläche erfolgt. Ein Empfänger ist beispielsweise dort angeordnet, wo das Signal, nachdem es dreimal in der Behälterwand hin und her gelaufen ist, die Oberfläche, die den Sender trägt, erreicht. Falls der Sender senkrecht in die Behälterwand einspeist, können Sender und Empfänger in einem Gehäuse untergebracht sein.

Falls sich an der dem Sender und dem Empfänger gegenüberliegenden Oberfläche keine Flüssigkeit befindet, wird das Signal weitgehend unverändert am Empfänger ankommen. Befindet sich an der genannten Oberfläche, also im Behälter, eine Flüssigkeit, dann wird bei jeder Reflexion des Signals an dieser Oberfläche Energie aus dem Signal in die Flüssigkeit ausgekoppelt. Am Empfänger kommt also ein reflektiertes Signal an, das kleiner als das vom Sender eingespeiste Signal ist. Der Effekt ist um so deutlicher, je mehr Reflexionen in der Behälterwand erfolgen.

Einrichtungen wie die in Figur 7 der EP 0 309 890 A1 dargestellte Einrichtung können an einer Wand eines Behälters in regelmäßigen oder unregelmäßigen Abständen angeordnet sein. Einen Hinweis auf den Füllstand im Behälter erhält man dann durch die am höchsten gelegene Einrichtung, die das Vorhandensein von Flüssigkeit auf der Sender umd Empfänger gegenüberliegenden Seite der Wand anzeigt.

Mit dem bekannten Verfahren und mit der gezeigten Einrichtung kann das Vorhandensein von Flüssigkeit nur dann detektiert werden, wenn eine klare Trennung zwischen Flüssigkeit und Gasraum im Behälter vorliegt. Insbesondere wenn im Behälter eine hohe Temperatur herrscht, ist der Flüssigkeitsspiegel nicht glatt. Dann befinden sich in der Flüssigkeit Gasblasen, und im Gasraum befindet sich Flüssigkeit zumindest an den Wänden. Eine solche Situation ist zum Beispiel in einem Reaktordruckbehälter gegeben. Bedingt durch die Gasblasen kann, obwohl Flüssigkeit vorhanden ist, das Fehlen von Flüssigkeit angezeigt werden. Ebenso kann, bedingt durch einen Flüssigkeitsfilm auf der Wand im Gasraum, Flüssigkeit angezeigt werden.

Der Erfindung liegt die Aufgabe zugrunde, ein Verfahren zum Bestimmen, ob in einem Behälter Flüssigkeit enthalten ist, anzugeben, das selbst dann ein zuverlässiges Ergebnis bringt, wenn Flüssigkeit und Gas im Behälter nicht klar getrennt sind. Es soll auch eine geeignete Einrichtung angegeben werden.

Die erstgenannte Aufgabe wird gemäß der Erfindung dadurch gelöst, daß in zeitlichen Abständen das Signal mehrmals eingespeist wird und die reflektierten Signale gemessen werden, daß ein erster Schwellwertverlauf bestimmt wird, der um einen Betrag unterhalb des jeweils größten gemessenen reflektierten Signals liegt, daß ein zweiter Schwellwertverlauf bestimmt wird, der um einen Betrag oberhalb des jeweils kleinsten gemessenen reflektierten Signals liegt, daß bei einer bekannten Ausgangssituation, falls zuvor das Vorhandensein von Flüssigkeit festgestellt worden ist und ein reflektiertes Signal über dem zweiten Schwellwertverlauf liegt, das Fehlen von Flüssigkeit angezeigt wird, daß falls zuvor das Fehlen von Flüssigkeit festgestellt worden ist und ein reflektiertes Signal unter dem ersten Schwellwertverlauf liegt, das Vorhandensein von Flüssigkeit angezeigt wird und daß sonst die vorherige Anzeige bestätigt wird.

Mit diesem Verfahren gelingt es auszuschließen, daß kurzfristige Änderungen der Situation im Behälter zu einem Wechsel der Anzeige führen. Es ist beispielsweise ausgeschlossen, daß eine kurzzeitige Häufung von Blasen in einer Flüssigkeit die Anzeige "keine Flüssigkeit vorhanden" bewirkt. Genauso ist ausgeschlossen, daß ein Flüssigkeitsfilm auf der Wand des Gasraums des Behälters die Anzeige "Flüssigkeit vorhanden" bewirkt.

Ob im Behälter eine Flüssigkeit vorhanden ist oder nicht, kann selbst dann unterschieden werden, wenn bei einem Gemisch im Behälter wenigstens der größte Anteil des Gemisches Flüssigkeit bzw. Gas ist.

Der Behälter kann ein Reaktordruckbehälter sein, in dem wegen hoher Temperatur und hohem Druck eine eindeutige Trennung von Flüssigkeitsbereich und Gasbereich nicht gegeben ist. Der Behälter kann aber auch ein andersartiger Behälter, zum Beispiel auch ein Rohr einer Pipeline sein.

Erst mit dem Verfahren gemäß der Erfindung ist es möglich, beispielsweise in einem Reaktordruckbehälter unter den dort herrschenden Bedingungen jederzeit zuverlässig den Füllstand zu bestimmen.

Beispielsweise wird das eingespeiste Signal zwischen den beiden Oberflächen der Wand ein oder mehrmals hin- und herreflektiert und dann an der Oberfläche, in die das Signal eingespeist wird, gemessen. Durch mehrmaliges Hin- und und Herreflektieren wird das Signal bei jeder Reflexion an der dem Inneren des Behälters zugewandten Oberfläche geschwächt, sofern dort Flüssigkeit vorhanden ist. Das erfolgt durch Auskoppelung von Energie des Signals in die Flüssigkeit. Dadurch, daß bei mehreren Reflexionen mehrmals Energie ausgekoppelt wird, erhält man ein deutlich kleineres Restsignal, wodurch die Abnahme leichter zu erkennen ist.

Zum Bestimmen des Füllstands in einem Behälter wird das beschriebene Verfahren nach der Erfindung an verschiedenen Niveaus des Behälters durchgeführt. Als Füllstand wird das höchste Niveau, an dem Flüssigkeit festgestellt worden ist, bestimmt.

Um den Füllstand besonders zuverlässig erkennen zu können, wird beispielsweise über die in zeitlichen Abständen bestimmten Signale ein gleitender Mittelwert gebildet. Dazu wird beispielweise zunächst ein Mittelwert der Signale 1 bis 5, dann ein Mittelwert der Signale 2 bis 6, dann der Signale 3 bis 7 usw. bestimmt. Die Folge der Mittelwerte tritt dann für die weitere Auswertung an die Stelle der Signalfolge.

Um die Anzahl der zu untersuchenden Meßwerte zu verringern, kann jeweils für einen vorgegebenen Zeitraum nur das jeweils größte und kleinste gemessene, reflektierte Signal berücksichtigt werden.

Beispielsweise entspricht der Betrag, um den der Schwellwertverlauf vom größten oder kleinsten reflektierten Signal abweicht, einem bestimmten Prozentsatz des größten oder kleinsten reflektierten Signals. Dabei können unterschiedliche Prozentsätze für die beiden Schwellwertverläufe vorgesehen sein. Beispielsweise entspricht der Betrag 6% des größten oder kleinsten Signals. Da zum Beispiel bei einer zweiten Meßreihe andere größte und kleinste Signale vorliegen werden, sind dann nicht nur die Schwellwerte, sondern auch die Abstände der Schwellwerte vom größten oder kleinsten Signal anders als bei der ersten Meßreihe. Mit diesem Verfahrensschritt wird der Vorteil erzielt, daß mit erhöhter Genauigkeit festzustellen ist, ob Flüssigkeit vorhanden ist oder nicht.

Das Bestimmen der Schwellwerte kann in repitierenden Zeitabständen wiederholt werden. Dabei werden die bisherigen größten und kleinsten Signale verworfen. Das Verfahren beginnt von neuem. Damit wird der Vorteil erzielt, daß ein einmal aufgetretenes, sehr extremes Signal nicht für sehr lange Zeit Berücksichtigung findet.

Beispielsweise kann, wie schon aus Figur 7 der EP 0 309 890 A1 bekannt ist, mit einem geeignet positionierten Empfänger untersucht werden, ob ein Teil des in Flüssigkeit ausgekoppelten Signals an einem Einbaukörper reflektiert wird. Dabei ist das Brechungsverhalten des Signals an der Grenzfläche zwischen Behälterwand und Flüssigkeit zu beachten. Beim Erkennen eines reflektierten Signals ist eindeutig abzuleiten, daß Flüssigkeit im Behälter vorhanden ist. Dieses zusätzliche Meßverfahren läßt eindeutig erkennen, ob Flüssigkeit im Behälter vorhanden ist. Das zusätzliche Verfahren kann zur Überprüfung des Hauptverfahrens herangezogen werden.

Um im Grenzbereich von Flüssigkeit und Gas eine Information zu bekommen, wird beispielsweise ein dritter Schwellwertverlauf festgelegt, der oberhalb des ersten Schwellwertverlaufs und unterhalb des jeweils größten gemessenen, reflektierten Signals liegt. Ein vierter Schwellwertverlauf liegt unterhalb des zweiten Schwellwertverlaufs und oberhalb des jeweils kleinsten gemessenen, reflektierten Signals. Falls in einem Bewertungszeitraum von einem gemessenen, reflektierten Signal der dritte Schwellwertverlauf unterschritten und der vierte gleichzeitig überschritten wird, wird das Fehlen von Flüssigkeit angezeigt. Mit diesem Verfahrensschritt wird der Vorteil erzielt, daß Falschanzeigen weitgehend ausgeschlossen sind. Der dritte bzw. vierte Schwellwertverlauf kann in der Mitte zwischen dem größten bzw. kleinsten Signal und dem ersten bzw. zweiten Schwellwert liegen.

Zur noch weiteren Steigerung der Genauigkeit kann vorgesehen sein, daß ein Ergebnis erst dann als richtig akzeptiert wird, wenn es durch eine oder mehrere Messungen bestätigt worden ist.

Aus der Laufzeit des Signals vom Sender zum Empfänger kann, wenn die zurückgelegte Strecke bekannt ist, auf die Signalgeschwindigkeit, z.B. die Schallgeschwindigkeit, geschlossen werden. Unter Berücksichtigung einer bekannten Temperaturabhängigkeit der Signalgeschwindigkeit kann dann auf die Temperatur im Behälter geschlossen werden. Damit ist eine zuverlässige Methode zur Temperaturmessung gegeben.

Die Schwellwertverläufe können abhängig von der Signalgeschwindigkeit und/oder abhängig von der Temperatur festgelegt werden. Das trägt zur Zuverlässigkeit des Verfahrens bei.

Die zweite genannte Aufgabe, eine Einrichtung zum Bestimmen, ob in einem Behälter Flüssigkeit enthalten ist, anzugeben, wird gemäß der Erfindung dadurch gelöst, daß der Sender und der Empfänger mit einer Auswerteeinheit verbunden sind, daß die Auswerteeinheit zum Bestimmen des jeweils größten und des jeweils kleinsten gemessenen reflektierten Signals, mindestens eines ersten Schwellwertverlaufs, der um einen Betrag unter dem jeweils größten gemessenen, reflektierten Signal verläuft, und mindestens eines zweiten Schwellwertverlaufs, der um einen Betrag über dem jeweils kleinsten gemessenen reflektierten Signal verläuft, sowie zum Vergleich jedes gemessenen reflektierten Signals mit einem Schwellwertverlauf dient und daß die Auswerteeinheit mit einer Anzeigeeinheit verbunden ist.

Beispielsweise kann ein zweiter Empfänger an der gleichen Oberfläche der Wand wie der Sender so positioniert sein, daß er ein an einem Einbauteil reflektiertes Signal, das eine Flüssigkeit durchlaufen hat, empfangen kann. Dieser zweite Empfänger ist ebenfalls mit der Auswerteeinheit verbunden und dient zur ergänzenden Überprüfung der Messungen.

Mit dem Verfahren und der Einrichtung gemäß der Erfindung wird der Vorteil erzielt, daß selbst bei einer sehr unruhigen Flüssigkeit in einem Behälter sicher erkannt werden kann, ob an einer bestimmten Stelle im Behälter Flüssigkeit vorhanden ist. Dadurch läßt sich der Füllstand zuverlässig bestimmen. Ein besonders geeignetes Anwendungsgebiet ist die Füllstandsmessung in einem Reaktordruckbehälter eines Kernkraftwerks.

Ein Ausführungsbeispiel des Verfahrens und der Einrichtung nach der Erfindung werden anhand der Zeichnung näher erläutert.
- Figur 1: zeigt ein Ausführungsbeispiel einer Einrichtung nach der Erfindung mit Sender und Empfänger an einer Behälterwand.
- Figur 2: zeigt mehrere Meßwerte, wenn zuvor keine Flüssigkeit vorhanden war.
- Figur 3: zeigt mehrere Meßwerte, wenn zuvor Flüssigkeit vorhanden war.

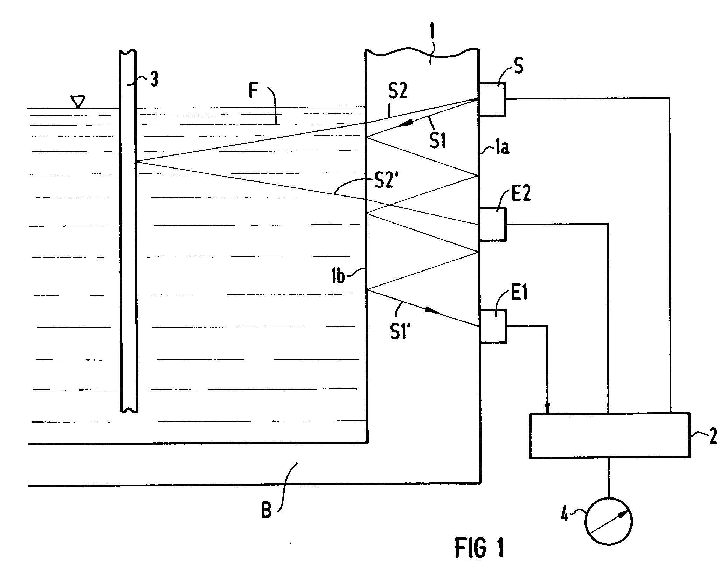

An einer äußeren Oberfläche 1a der Wand 1 eines Behälters B nach Figur 1 ist ein Sender S angeordnet. Es kann sich dabei um einen Ultraschallsender, insbesondere um einen elektromagnetischen Ultraschallsender gemäß der EP 0 309 890 A1, handeln. Ein Signal S1 des Senders S wird an der gegenüberliegenden inneren Oberfläche 1b der Wand 1 reflektiert und gelangt zur äußeren Oberfläche 1a, auf der sich der Sender S befindet, zurück. Dort kann eine erneute Reflexion erfolgen. Nachdem das Signal S1 dreimal in der Wand 1 hin- und hergelaufen ist, trifft es als reflektiertes Signal S1′ auf den Empfänger E1, der an der äußeren Oberfläche 1a der Wand 1 angeordnet ist. Dort wird es empfangen und einer Auswerteeinheit 2 zugeführt, die mit einer Anzeigeeinheit 4 verbunden ist. Falls im Behälter B Flüssigkeit F vorhanden ist, verliert das Signal S1 bei jeder Reflexion an der inneren Oberfläche 1b der Wand 1 Energie an die Flüssigkeit F. Wird am Empfänger E1 ein Energieverlust des reflektierten Signals S1′ gegenüber dem eingespeisten Signal S1 festgestellt, dann muß im Behälter B Flüssigkeit F vorhanden sein, und zwar bis über die Position des Empfängers E1 hinaus.

Als zusätzlicher Nachweis, ob Flüssigkeit F vorhanden ist, ist ein zusätzlicher Empfänger E2 so positioniert, daß, falls Flüssigkeit F im Behälter B oberhalb des Empfängers E2 vorhanden ist, ein Signal S2 des Senders S nach Brechung und Reflexion an einem Einbauteil 3 als reflektiertes Signal S2′ genau auf den Empfänger E2 trifft. Wird also am Empfänger E2 ein reflektiertes Signal S2′ festgestellt, dann muß im Behälter B eine Flüssigkeit F vorhanden sein.

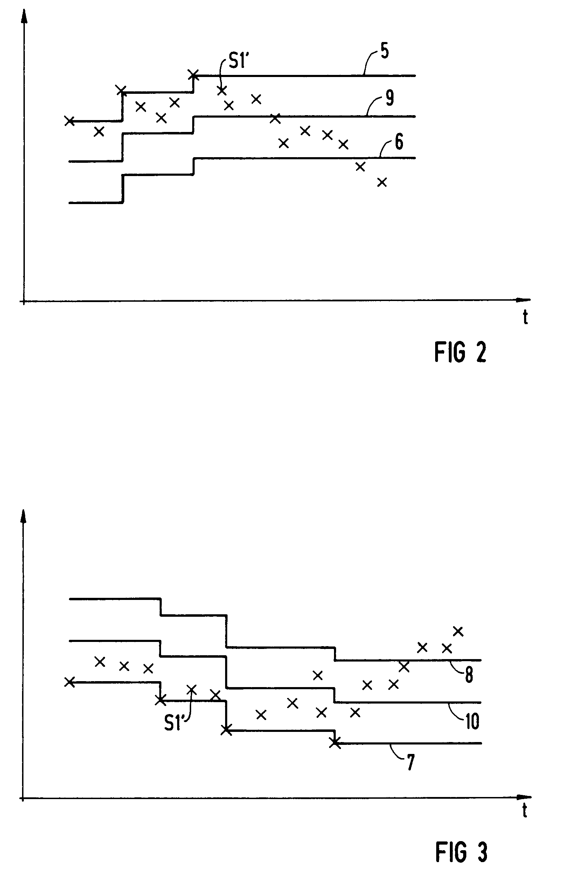

Für eine Meßreihe werden mehrere Signale S1 vom Sender S ausgesandt und reflektierte Signale S1′ vom Empfänger E1 registriert. Eine solche Meßreihe ist in den Figuren 2 und 3 in Abhängigkeit von der Zeit t als Kreuze dargestellt. Im Laufe der Meßreihe wird nach Figur 2 eine Maximumskurve festgelegt, die den Ordinatenwert des jeweils größten gemessenen reflektierten Signals 5 repräsentiert. Dann wird ein erster Schwellwertverlauf 6 festgelegt, der um einen vorgegebenen Betrag unterhalb der Maximumskurve verläuft. Falls zunächst keine Flüssigkeit F im Behälter B vorhanden ist, dann zeigt ein Unterschreiten des Schwellwertverlaufs 6 durch einen Meßwert der Meßreihe an, daß jetzt Flüssigkeit F vorhanden ist.

Falls zunächst Flüssigkeit F im Behälter B vorhanden ist, wird nach Figur 3 eine Minimumskurve dadurch festgelegt, daß diese jeweils den Ordinatenwert des jeweils kleinsten gemessenen reflektierten Signals 7 repräsentiert. Ein zweiter Schwellwertverlauf 8 liegt um einen vorgegebenen Betrag oberhalb der Minimumskurve. Falls zunächst Flüssigkeit F im Behälter B vorhanden ist, zeigt ein Überschreiten des zweiten Schwellwertverlaufs 8 durch einen Meßwert der Meßreihe an, daß jetzt keine Flüssigkeit F vorhanden ist. Das gilt jeweils für den Ort der ersten Reflexion des Signals S1 an der inneren Oberfläche 1b der Wand 1.

Zur weiteren Verbesserung der Meßgenauigkeit kann z. B. ungefähr in der Mitte zwischen der Maximumskurve und dem ersten Schwellwertverlauf 6 in Figur 2 ein dritter Schwellwertverlauf 9 angeordnet sein. Entsprechend ist nach Figur 3 ein vierter Schwellwertverlauf 10 vorhanden. Falls der dritte Schwellwertverlauf 9 durch einen Meßwert unterschritten und gleichzeitig der vierte Schwellwertverlauf 10 durch den gleichen Meßwert überschritten wird, wird angenommen, daß keine Flüssigkeit F im Behälter B vorhanden ist.

Mit dem Verfahren und der Einrichtung gemaß der Erfindung kann festgestellt werden, ob im Behälter B Flüssigkeit F vorhanden ist oder nicht, selbst dann, wenn im Gasraum Flüssigkeitstropfen vorhanden sind, die an den Wänden herunterlaufen und im Flüssigkeitsraum Gasblasen vorhanden sind.

## Patentansprüche

1. Verfahren zum Bestimmen, ob in einem Behälter (B) Flüssigkeit (F) enthalten ist, wobei in eine äußere Oberfläche (1a) einer Wand (1) des Behälters (B) ein Signal (S1) eingespeist wird, das an der inneren Oberfläche (1b) dieser Wand (1) ganz oder teilweise reflektiert wird, und wobei das reflektierte Signal (S1′) an der äußeren Oberfläche (1a) der Wand (1) gemessen wird, **dadurch gekennzeichnet**, daß in zeitlichen Abständen das Signal (S1) mehrmals eingespeist wird und die reflektierten Signale (S1′) gemessen werden, daß ein erster Schwellwertverlauf (6) festgelegt wird, der um einen Betrag unterhalb des jeweils größten gemessenen reflektierten Signals (5) liegt,
daß ein zweiter Schwellwertverlauf (8) festgelegt wird, der um einen Betrag oberhalb des jeweils kleinsten gemessenen reflektierten Signals (7) liegt,
daß bei einer bekannten Ausgangssituation, falls zuvor das Vorhandensein von Flüssigkeit (F) festgestellt worden ist und ein reflektiertes Signal (S1′) über dem zweiten Schwellwertverlauf (8) liegt, das Fehlen von Flüssigkeit (F) angezeigt wird,
daß, falls zuvor das Fehlen von Flüssigkeit (F) festgestellt worden ist und ein reflektiertes Signal (S1′) unter dem ersten Schwellwertverlauf (6) liegt, das Vorhandensein von Flüssigkeit (F) angezeigt wird und
daß sonst die vorherige Anzeige bestätigt wird.

2. Verfahren nach Anspruch 1,
**dadurch gekennzeichnet**, daß das eingespeiste Signal (S1) zwischen den beiden Oberflächen (1a, 1b) der Wand (1) einmal oder mehrmals hin- und herreflektiert wird und dann als reflektiertes Signal (S1′) an der Oberfläche (1a), in die das Signal (S1) eingespeist wird, gemessen wird.

3. Verfahren nach einem der Ansprüche 1 oder 2,
**dadurch gekennzeichnet**, daß zum Bestimmen des Füllstandes im Behälter (B) an verschiedenen Niveaus am Behälter (B) bestimmt wird, ob im Behälter (B) Flüssigkeit (F) vorhanden ist, und daß als Füllstand das höchste Niveau, an dem Flüssigkeit (F) vorhanden ist, bestimmt wird.

4. Verfahren nach einem der Ansprüche 1 bis 3,
**dadurch gekennzeichnet**, daß gleitende Mittelwerte der gemessenen reflektierten Signale (S1′) gebildet und diese Mittelwerte anstelle der gemessenen reflektierten Signale (S1′) weiterverarbeitet werden.

5. Verfahren nach einem der Ansprüche 1 bis 4,
**dadurch gekennzeichnet**, daß für vorgegebene Zeiträume innerhalb jedes Zeitraums jeweils das größte und das kleinste gemessene, reflektierte Signal (S1′) bestimmt wird und nur diese Signale (S1′) weiterverarbeitet werden.

6. Verfahren nach einem der Ansprüche 1 bis 5,
**dadurch gekennzeichnet**, daß der Betrag, um den der Schwellwertverlauf (6, 8) vom größten oder kleinsten reflektierten Signal (5, 7) abweicht, einem bestimmten Prozentsatz des größten oder kleinsten reflektierten Signals (5, 7) entspricht.

7. Verfahren nach einem der Ansprüche 1 bis 6,
**dadurch gekennzeichnet**, daß in repitierenden Zeitabständen die Schwellwertverläufe (6, 8) erneut bestimmt werden.

8. Verfahren nach einem der Ansprüche 1 bis 7,
**dadurch gekennzeichnet**, daß, falls ein Signal (S2′) registriert wird, das eine Flüssigkeit (F) im Behälter (B) durchlaufen hat und an einem Einbauteil (3) im Behälter (B) reflektiert ist, das Vorhandensein von Flüssigkeit (F) angezeigt wird.

9. Verfahren nach einem der Ansprüche 1 bis 8,
**dadurch gekennzeichnet**, daß ein dritter Schwellwertverlauf (9) oberhalb des ersten Schwellwertverlaufs (6) und unterhalb des jeweils größten gemessenen reflektierten Signals (5) und ein vierter Schwellwertverlauf (10) unterhalb des zweiten Schwellwertverlaufs (8) und oberhalb des jeweils kleinsten gemessenen reflektierten Signals (7) festgelegt werden und daß, falls in einem Bewertungszeitraum von einem reflektierten Signal (S1′) der dritte Schwellwertverlauf (9) unterschritten und der vierte Schwellwertverlauf (10) überschritten wird, das Fehlen von Flüssigkeit (F) angezeigt wird.

10. Verfahren nach einem der Ansprüche 1 bis 9,
**dadurch gekennzeichnet**, daß ein Ergebnis erst nach einer ein- oder mehrfachen Bestätigung als richtig akzeptiert wird.

11. Einrichtung zum Bestimmen, ob in einem Behälter (B) Flüssigkeit (F) enthalten ist, wobei an einer äußeren Oberfläche (1a) einer Wand (1) des Behälters (B) ein Sender (S) und an der gleichen Oberfläche (1a) mindestens ein Empfänger (E1) angeordnet sind,
**dadurch gekennzeichnet**, daß der Sender (S) und der Empfänger (E1) mit einer Auswerteeinheit (2) verbunden sind, daß die Auswerteeinheit (2) zum Bestimmen des jeweils größten und des jeweils kleinsten gemessenen reflektierten Signals (5, 7), mindestens eines ersten Schwellwertverlaufs (6), der um einen Betrag unter dem jeweils größten gemessenen, reflektierten Signal (5) verläuft, und mindestens eines zweiten Schwellwertverlaufs (8), der um einen Betrag über dem jeweils kleinsten gemessenen, reflektierten Signal (7) verläuft, sowie zum Vergleich jedes gemessenen reflektierten Signals (S1′) mit einem Schwellwertverlauf dient, und daß die Auswerteeinheit (2) mit einer Anzeigeeinheit (4) verbunden ist.

## Claims

1. Method for determining whether liquid (F) is contained in a container (B), in which a signal (S1) is fed into an outer surface (1a) of the wall (1) of the container (B) which is entirely or partly reflected at the opposite inner surface (1b) of the wall (1), and in which the reflected signal (S1′) is measured at the outer surface (1a) of the wall (1), characterised in that the signal (S1) is fed in once or repeatedly at time intervals and the reflected signals (S1′) are measured,
that a first threshold value characteristic (6) is established which lies by an amount below the respective highest measured reflected signal (5),
that a second threshold value characteristic (8) is established which lies by an amount above the respective lowest measured reflected signal (7),
that, given a known starting situation, if the presence of liquid (F) has been established beforehand and a reflected signal (S1′) lies above the second threshold value characteristic (8), the absence of liquid (F) is indicated,
that, if the absence of liquid (F) has been established beforehand and a reflected signal (S1′) lies below the first threshold value characteristic (6), the presence of liquid (F) is indicated, and
that the previous indication is otherwise confirmed.

2. Method according to claim 1, characterised in that the signal (S1) which is fed in is reflected once or repeatedly back-and-forth between the two surfaces (1a, 1b) of the wall (1) and then measured as a reflected signal (S1′) at the surface (1a) into which the signal (S1) is fed.

3. Method according to claim 1 or 2, characterised in that, in order to determine the height of fill in the container (B), a determination is carried out at various levels of the container (B) as to whether liquid (F) is present in the container (B), and that the highest level at which liquid (F) is present is determined as the height of fill.

4. Method according to one of claims 1 to 3, characterised in that sliding average values of the measured reflected signals (S1′) are formed and these average values are further processed instead of the measured reflected signals (S1′).

5. Method according to one of claims 1 to 4, characterised in that the respective highest and lowest measured, reflected signal (S1′) is determined for predetermined periods within each period and only these signals (S1′) are further processed.

6. Method according to one of claims 1 to 5, characterised in that the amount by which the threshold value characteristic (6, 8) differs from the highest or lowest reflected signal (5, 7) corresponds to a certain percentage of the highest or lowest reflected signal (5, 7).

7. Method according to one of claims 1 to 6, characterised in that the threshold value characteristics (6, 8) are re-determined at repetitive time intervals.

8. Method according to one of claims 1 to 7, characterised in that, if a signal (S2′) is recorded which has passed through a liquid (F) in the container (B) and is reflected at a built-in part (3) in the container (B), the presence of liquid (F) is indicated.

9. Method according to one of claims 1 to 8, characterised in that a third threshold value characteristic (9) above the first threshold value characteristic (6) and below the respective highest measured reflected signal (5) is established and a fourth threshold value characteristic (10) below the second threshold value characteristic (8) and above the respective lowest measured reflected signal (7) is established and that, if a reflected signal (S1′) falls short of the third threshold value characteristic (9) and exceeds the fourth threshold value characteristic (10) in an evaluation period, the absence of liquid (F) is indicated.

10. Method according to one of claims 1 to 9, characterised in that a result is only accepted as correct following confirmation once or several times.

11. Device for determining whether liquid (F) is contained in a container (B), in which a transmitter (S) is arranged at an outer surface (1a) of a wall (1) of the container (B) and at least one receiver (E1) is arranged at the same surface (1a), characterised in that the transmitter (S) and the receiver (E1) are connected to an evaluation unit (2), that the evaluation unit (2) serves to determine the respective highest and the respective lowest measured reflected signal (5, 7), at least one first threshold value characteristic (6), which extends by an amount below the respective highest measured, reflected signal (5), and at least one second threshold value characteristic (8), which extends by an amount above the respective lowest measured reflected signal (7), and to compare each measured reflected signal (S1′) with a threshold value characteristic, and that the evaluation unit (2) is connected to a display unit (4).

## Revendications

1. Procédé pour déterminer la présence d'un liquide (F) dans un récipient (B), selon lequel on introduit, dans une surface extérieure (1a) d'une paroi (1) du récipent (B), un signal (S1), qui est réfléchi en totalité ou en partie sur la surface intérieure opposée (1b) de la paroi (1), et selon lequel on mesure le signal réfléchi (S1′), au niveau de la surface extérieure (1a) de la paroi (1), caractérisé par le fait
qu'on introduit le signal (S1) à plusieurs reprises entre des intervalles de temps et on mesure les signaux réfléchis (S1′), on détermine une première courbe de valeur de seuil (6), qui est inférieure, d'une certaine valeur, au signal maximum réfléchi mesuré (5),
on détermine une seconde courbe de valeur de seuil (8), qui est supérieure, d'une certaine valeur, au signal minimum réfléchi mesuré (7),
pour une situation connue de départ, dans le cas où auparavant la présence d'un liquide (F) a été établie et où un signal réfléchi (S1′) se situe au-dessus de la seconde courbe de valeur de seuil (8), on indique l'absence du liquide (F),
dans le cas où l'absence d'un liquide (F) a été établie auparavant et où un signal réfléchi (S1′) est situé au-dessous de la première courbe de valeur de seuil (6), on indique la présence du liquide (F), et
sinon, l'indication précédente est confirmée.

2. Procédé suivant la revendication 1 caractérisé par le fait que le signal introduit (S1) est réfléchi une fois ou plusieurs fois en va-et-vient entre les deux surfaces (1a,1b) de la paroi (1) et est ensuite mesuré en tant que signal réfléchi (S1′) au niveau de la surface (1a), dans laquelle le signal (S1) est introduit.

3. Procédé suivant l'une des revendications 1 ou 2, caractérisé par le fait que pour la détermination du niveau de remplissage dans le récipient (B), on détermine pour différents niveaux du récipient (B) si un liquide (F) est présent dans le récipient (B), et on détermine en tant que niveau de remplissage le niveau le plus haut, pour lequel le liquide (F) est présent.

4. Procédé suivant l'une des revendications 1 à 3, caractérisé par le fait qu'on forme des valeurs moyennes courantes des signaux réfléchis mesurés (S1′) et qu'on poursuit le traitement avec ces valeurs moyennes au lieu des signaux réfléchis (S1′) mesurés.

5. Procédé suivant l'une des revendications 1 à 4, caractérisé par le fait que l'on détermine pour des intervalles de temps prédéterminés, à l'intérieur de chaque intervalle de temps respectivement les signaux le plus grand et le plus petit réfléchis mesurés (S1′) et l'on poursuit le traitement uniquement avec ces signaux (S1′).

6. Procédé suivant l'une des revendications 1 à 5, caractérisé par le fait que la valeur, dont la courbe de valeur de seuil (6,8) s'écarte du signal le plus grand ou le plus petit réfléchi (5,7) correspond à un pourcentage déterminé du signal le plus grand ou le plus petit réfléchi (5,7).

7. Procédé suivant l'une des revendications 1 à 6, caractérisé par le fait que l'on détermine à nouveau les courbes de valeur de seuil (6,8) à des intervalles de temps qui se répètent.

8. Procédé suivant l'une des revendications 1 à 7, caractérisé par le fait que dans le cas ou l'on enregistre un signal (S2′), qui a traversé un liquide (F) contenu dans le récipient (B) et a été réfléchi par un élément de montage (3) dans le récipient (B), on indique la présence du liquide (F).

9. Procédé suivant l'une des revendications 1 à 8, caractérisé par le fait qu'on détermine une troisième courbe de valeur de seuil (9) au-dessus de la première courbe de valeur de seuil (6) et au-dessous du signal le plus grand mesuré réfléchi (5), et une quatrième courbe de valeur de seuil (10) au-dessous de la seconde courbe de valeur de seuil (8) et au-dessus du signal le plus petit mesuré réfléchi (7), et dans le cas où, pendant un intervalle de temps d'évaluation, un signal réfléchi (S1′) tombe au-dessous de la troisième courbe de valeur de seuil (9) et dépasse la quatrième courbe de valeur de seuil (10), on indique l'absence du liquide (F).

10. Procédé suivant l'une des revendications 1 à 9, caractérisé par le fait que l'on n'accepte un résultat comme étant correct qu'après une confirmation unique ou multiple.

11. Dispositif pour déterminer la présence d'un liquide (F) dans un récipient (B), un émetteur (S) étant disposé sur une surface extérieure (1a) d'une paroi (1) du récipient (B) et au moins un récepteur (E1) étant disposé sur la même surface (1a),
caractérisé par le fait que l'émetteur (S) et le récepteur (E1) sont reliés à une unité d'évaluation (2), I'unité d'évaluation (2) sert à déterminer les signaux le plus grand et le plus petit mesurés réfléchis (5,6), au moins une première courbe de valeur de seuil (6), qui est inférieure, d'une certaine valeur, au signal le plus grand mesuré réfléchi (5), et au moins une seconde courbe de valeur de seuil (8), qui est supérieure, d'une certaine valeur, au signal le plus petit mesuré réfléchi (7), ainsi qu'à comparer chaque signal mesuré réfléchi (S1′) à une courbe de valeur de seuil, et l' unité d'évaluation (2) est reliée à une unité d'affichage (4).
